Europäisches Patentamt

European Patent Office

Office européen des brevets

(19)

(11) Numéro de publication: **0 264 349**
**B1**

(12)

# FASCICULE DE BREVET EUROPEEN

(45) Date de publication du fascicule du brevet:
07.03.90

(51) Int. Cl.⁴: **F16P 3/14**

(21) Numéro de dépôt: 87810587.3

(22) Date de dépôt: 13.10.87

(54) **Dispositif de sécurité pour presse plieuse ou machine analogue.**

(30) Priorité: 14.10.86 CH 4098/86

(43) Date de publication de la demande:
20.04.88 Bulletin 88/16

(45) Mention de la délivrance du brevet:
07.03.90 Bulletin 90/10

(84) Etats contractants désignés:
BE CH DE ES FR GB IT LI NL SE

(56) Documents cités:
DE-A- 3 116 292
DE-B- 2 750 234
FR-A- 2 512 920
FR-A- 2 540 224
US-A- 4 489 578

(73) Titulaire: CYBELEC S.A., Rue des Uttins 27,
CH-1400 Yverdon-les-Bains(CH)

(72) Inventeur: Maillefer, Jean-Claude, CH-1315 Orny(CH)

(74) Mandataire: Hranitzky, Wilhelm Max et al, c/o WILLIAM
BLANC & CIE Conseils en Propriété Industrielle
SA 6, rue de la Grotte, CH-1003 Lausanne(CH)

ACTORUM AG

## Description

L'invention concerne un dispositif de sécurité du type barrière immatérielle pour une presse plieuse ou une machine analogue.

On connaît des dispositifs de sécurité du type barrière lumineuse permettant de commander l'arrêt immédiat du mouvement de la machine lorsque la présence d'un corps étranger, tel que par exemple un outil ou la main de l'opérateur, est détectée dans une zone d'accès interdit.

Parmi les dispositifs connus, un dispositif intéressant est décrit dans le brevet français 2,512,920. Ce dispositif est constitué par un émetteur laser, situé d'un côté de la presse, émettant un rayon laser dirigé parallèlement à l'arête du poinçon et s'étendant au voisinage immédiat du plan vertical passant par l'arête inférieure du poinçon, au-dessus de la surface supérieure de la pièce à plier, à une distance comprise entre l'épaisseur d'un doigt et la course d'arrêt du mouvement du poinçon à petite vitesse. Si un corps est introduit dans la zone dangereuse, soit transversalement, soit poussé devant le poinçon qui descend, la course du poinçon est interrompue. Le système est automatiquement désactivé au moment ou le poinçon atteint le faisceau. A ce moment, la distance entre le poinçon et la surface supérieure de la tôle est telle qu'il n'est plus possible d'y introduire un doigt.

Ce dispositif a l'avantage de permettre une grande liberté à l'opérateur pour la manipulation de la pièce à plier sur la machine, au contraire par exemple d'un rideau lumineux installé sur le devant de la machine. Toutefois, ce dispositif n'est pas d'une efficacité totale. En effet, dans le cas d'une presse plieuse moderne le temps de réaction de la presse est de l'ordre de 80 à 100 voire 120 millisecondes, les presses plieuses plus anciennes ayant des temps d'arrêt parfois encore beaucoup plus longs. Or, la grande vitesse du coulisseau atteignant couramment 100 millimètres par seconde, la distance d'arrêt qui en résulte est de l'ordre de 8 à 12 millimètres.

La position du faisceau lumineux est généralement choisie à 8 millimètres au-dessus de la surface supérieure de la pièce à plier, de façon que l'opérateur ou une autre personne ne puisse pas introduire accidentellement ses doigts sous le poinçon, après que le système de sécurité ait été désactivé. Pour que ce dispositif soit efficace, il est indispensable que la vitesse du coulisseau ait été commutée de grande vitesse (environ 100 millimètres par seconde) en petite vitesse (au maximum 20 millimètres par seconde) avant d'atteindre le point dit de sécurité. A petite vitesse, la distance d'arrêt n'étant plus que d'environ 2 millimètres, la sécurité est obtenue. Par contre, si la presse n'a pas été réglée pour passer en petite vitesse au-dessus du point de sécurité, le pliage est alors effectué à grande vitesse et la distance d'arrêt est de l'ordre de 10 à 12 millimètres, et la sécurité n'est alors plus assurée.

Le but de l'invention est de proposer un dispositif de sécurité du type barrière immatérielle pour presse plieuse ou machine analogue comportant un faisceau lumineux du type décrit ci-dessus, agencé de façon à permettre une sécurité totale.

A cet effet, l'invention concerne un dispositif de sécurité du type barrière immatérielle pour presse plieuse ou machine analogue tel que défini à la revendication 1. Des caractéristiques correspondant à des formes d'exécution particulières du dispositif de sécurité sont spécifiées dans les revendications subordonnées à la revendication 1.

D'autres avantages et caractéristiques favorables du dispositif de sécurité selon l'invention ressortiront plus clairement de la description qui suit, donnée à titre d'exemple, et qui se réfère aux dessins sur lesquels :

la fig. 1 est une vue schématique latérale d'une presse plieuse munie d'un dispositif de l'invention,

la fig. 2 est une coupe schématique verticale partielle de la presse de la figure 1, et

la fig. 3 est une coupe schématique longitudinale d'un exemple de récepteur du dispositif selon l'invention.

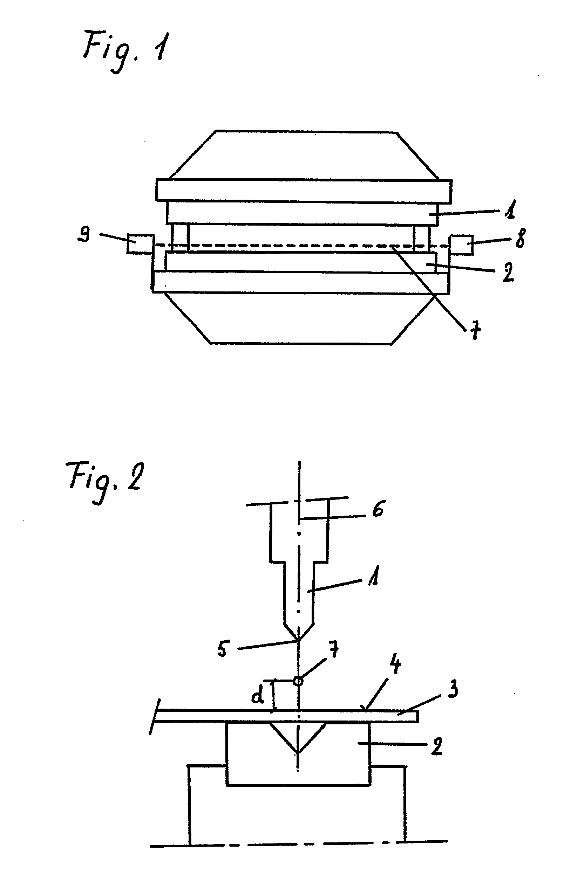

Comme représenté sur les figures 1 et 2, un faisceau lumineux 7 est émis par une source 8, telle que par exemple un émetteur laser, située d'un côté de la presse, et reçue par un récepteur situé de l'autre côté de la presse. La presse comporte un poinçon 1 et une matrice 2 sur laquelle est disposée une pièce à plier, telle que par exemple une tôle 3. Lors du mouvement de la presse, l'arête 5 du poinçon se déplace dans un plan vertical 6. La position du faisceau laser 7 est fixée dans ce plan vertical ou au voisinage de ce plan vertical, à une distance d au-dessus de la surface supérieure 4 de la tôle, comprise entre l'épaisseur d'un doigt, généralement admise à 8 millimètres, et la course d'arrêt du mouvement du poinçon à petite vitesse, qui est généralement de l'ordre de 2 à 3 millimètres. Dans le diamètre du faisceau laser 7 est intégré un dispositif permettant la mesure réelle de la vitesse du mouvement du poinçon lors du passage, devant le faisceau, du poinçon ou de tout corps entraîné par le poinçon. Bien entendu, le dispositif destiné à la mesure de la vitesse du coulisseau peut aussi être monté en-dessous du faisceau de sécurité 7 et utiliser un autre faisceau ou dispositif analogue.

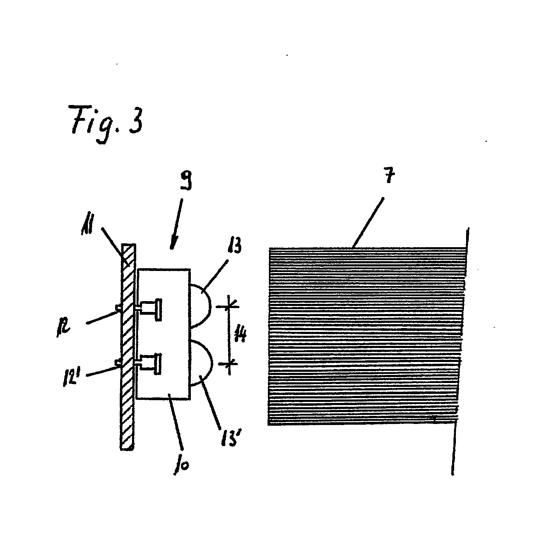

Comme représenté sur la figure 3, la mesure de la vitesse du mouvement du poinçon peut être par exemple effectuée à l'aide d'un récepteur comportant deux éléments photosensibles 13,13' construits dans le même boîtier 10 et constituant le récepteur 9. Cette disposition est avantageuse car elle permet de garantir un espacement 14 invariable des éléments photosensibles lors du montage du dispositif, quelles que soient les tolérances de perçage des trous 12,12' du circuit imprimé 11. Bien entendu, les éléments photosensibles peuvent aussi être montés dans des boîtiers séparés.

La vitesse du mouvement du poinçon peut être déterminée en divisant la distance 14 séparant les deux éléments photosensibles 13,13' par l'intervalle de temps séparant le moment de la coupure du premier élément photosensible 13 du moment de la coupure du second élément photosensible 13'. Lorsque la vitesse mesurée est supérieure à une vitesse prédéterminée, l'arrêt du mouvement du poinçon est immédiatement commandé.

Selon un mode préférentiel de réalisation du système de sécurité, lors de la coupure du premier élément photosensible 13, deux compteurs sont enclanchés. Ces compteurs sont déclanchés lors de la coupure du second élément photosensible 13'. Lorsque le nombre d'impulsions mesurées par l'un des compteurs ou par les deux compteurs est inférieur à un nombre prédéterminé, qui correspond à la petite vitesse de 20 millimètres par seconde, le dispositif commande immédiatement l'arrêt du mouvement du poinçon.

Le dispositif peut être muni d'un émetteur laser dont le rayon modulé est piloté par deux quartz dont chacun est agencé de façon à surveiller l'autre pour garantir une précision convenable et éviter toute dérive en fréquence, ce qui pourrait fausser la mesure de la vitesse.

Du fait de la présence de ce dispositif de sécurité, l'opérateur doit régler le passage grande vitesse en petite vitesse au-dessus de point de sécurité pour permettre le fonctionnement de sa presse. La mesure s'effectuant à chaque passage, le système est à même de déceler un déréglage progressif de la petite vitesse en cours de travail, ce dont l'opérateur ne pourrait s'apercevoir à temps en l'absence dudit dipositif.

Le contrôle permanent de la vitesse de passage au point de sécurité, associé au contrôle simultané de l'enclanchement de la zone d'inhibition juste avant la mesure de la vitesse permet d'établir un système de sécurité inviolable pour des conditions de travail correctes et offre une sécurité totale.

Le dispositif de l'invention peut être monté sur les presses plieuses ainsi que sur toutes machines analogues, telles que par exemple des cisailles, des presses à emboutir ou toutes machines nécessitant un changement de la vitesse avant son travail.

**Revendications**

1. Dispositif de sécurité du type barrière immatérielle, pour une presse plieuse ou une machine analogue, comportant un faisceau lumineux (7) émis par une source (8), reçu par un récepteur (9) et dirigé horizontalement dans le voisinage du plan vertical (6) décrit par le mouvement de l'arête du poinçon, à l'endroit de la zone dangereuse que constitue l'espace de hauteur variable situé entre l'arête (5) du poinçon et la surface supérieure (4) de la pièce à plier (3), la position du faisceau lumineux étant fixée à une distance (d) verticale de la surface supérieure (4) de la pièce à plier comprise entre l'épaisseur d'un doigt humain et la course d'arrêt du poinçon, caractérisé en ce qu'il comporte un dispositif de contrôle de la vitesse du poinçon, agencé de façon à commander l'interruption du mouvement du poinçon lorsque la vitesse mesurée est supérieure à une vitesse prédéterminée.

2. Dispositif selon la revendication 1, caractérisé en ce que le dispositif de contrôle de la vitesse du poinçon est intégré dans le faisceau lumineux de sécurité (7).

3. Dispositif selon la revendication 1, caractérisé en ce que le dispositif de contrôle de la vitesse du poinçon est situé en-dessus du faisceau lumineux de sécurité (7).

4. Dispositif selon l'une des revendications 2 ou 3, caractérisé en ce qu'il comporte un émetteur laser (8) situé d'un côté de la presse et émettant un rayon laser (7), et un récepteur (9) situé de l'autre côté de la presse et comportant deux éléments photosensibles (13,13') espacés verticalement et situés à l'intérieur du périmètre du rayon laser.

5. Dispositif selon la revendication 4, caractérisé en ce que l'émetteur laser émet un rayon piloté par un premier quartz, un second quartz étant agencé de façon que les deux quartz se surveillent mutuellement, de façon à garantir la précision de la mesure et à éviter toute dérive en fréquence.

6. Dispositif selon l'une des revendications 4 ou 5, caractérisé en ce que les deux éléments photosensibles (13,13') sont construits dans un même boîtier (10), de façon à garantir un espacement invariable (14) desdits deux éléments photosensibles.

7. Dispositif selon l'une des revendications 4 à 6, caractérisé en ce qu'il comporte deux compteurs agencés de façon à être enclanchés lors de la coupure du premier élément photosensible (13) et à être déclanché lors de la coupure du second élément photosensible (13'), et en ce qu'il est agencé de façon à interrompre la course du poinçon si le nombre d'impulsions mesurées par l'un des compteurs au moins est inférieur à un nombre prédéterminé.

8. Dispositif selon l'une des revendications précédentes, caractérisé en ce que la distance (d) entre le faisceau lumineux (7) et la surface supérieure (4) de la pièce à plier est comprise entre 3 et 8 millimètres.

**Claims**

1. A safety device of the intangible barrier type for a press brake or a similar machine, including a light beam (7) emitted by a source (8) and received by a receiver (9) and directed horizontally in the vicinity of the vertical plane (6) described by the motion of the edge of the punch, at the place of the dangerous zone which is constituted by the gap of variable height situated between the edge (5) of the punch and the upper surface (4) of the piece (3) to be folded, the position of the light beam, being fixed at a vertical distance (d) from the upper surface (4) of the piece to be folded, which lies between the thickness of a human finger and the stopping-distance of the punch, characterized in that it includes a device for checking the speed of the punch, arranged so as to order interruption of the motion of the punch when the measured speed is higher than a predetermined speed.

2. A device as in Claim 1, characterized in that the device for checking the speed of the punch is integrated into the safety light beam (7).

3. A device as in Claim 1, characterized in that the device for checking the speed of the punch is located above the safety light beam (7).

4. A device as in one of the claims 2 or 3, characterized in that it includes a laser emitter (8) located at one side of the press and emitting a laser beam (7), and a receiver (9) located at the other side of the press and including two photosensitive elements (13, 13') spaced vertically and located within the perimeter of the laser beam.

5. A device as in Claim 4, characterized in that the laser emitter emits a beam piloted by a first quartz crystal, a second quartz crystal being arranged so that the two quartz crystals monitor one another mutually so as to guarantee the accuracy of measurement and avoid any drift in frequency.

6. A device as in one of the Claims 4 or 5, characterized in that the two photosensitive elements (13, 13') are built into one and the same casing (10) so as to guarantee an invariable spacing (14) of the said two photosensitive elements.

7. A device as in one of the Claims 4 to 6, characterized in that it includes two counters arranged so as to be started upon cutoff of the first photosensitive element (13) and stopped upon cutoff of the second photosensitive element (13'), and in that it is arranged so as to interrupt the travel of the punch if the number of pulses measured by at least one of the counters is less than a predetermined number.

8. A device as in one of the preceding Claims, characterized in that the distance (d) between the light beam (7) and the upper surface (4) of the piece to be folded lies between 3 and 8 millimeters.

## Patentansprüche

1. Sicherheitsvorrichtung mit unsichtbarer Schranke für eine Abkantpresse oder ähnliche Maschinen, mit einem von einer Lichtquelle (8) ausgesandten Lichtstrahl (7), der von einem Empfänger (9) empfangen wird und der waagerecht in die Nähe der senkrechten Ebene (6) gerichtet wird, welche durch die Bewegung der Kante des Abkantstempels gebildet wird, und zwar in dem gefährlichen Bereich, der durch den in der Höhe variablen Raum zwischen der Kante (5) des Abkantstempels und der Oberfläche (4) des zu verformenden Werkstückes (3) gebildet wird, wobei der Verlauf des Lichtstrahles in einem Abstand (d) senkrecht oberhalb der Oberfläche (4) des zu verformenden Werkstücks festgelegt ist, der zwischen der Dicke eines menschlichen Fingers und dem Haltepunkt der Kante des Abkantstempels liegt, dadurch gekennzeichnet, daß die Vorrichtung eine Steueranordnung für die Geschwindigkeit des Abkantstempels aufweist, die so ausgelegt ist, daß sie eine Unterbrechung der Abkantstempelbewegung bewirkt, wenn die gemessene Geschwindigkeit größer als eine vorgegebene Geschwindigkeit ist.

2. Vorrichtung nach Anspruch 1, dadurch gekennzeichnet, daß die Steueranordnung für die Geschwindigkeit des Abkantstempels im Sicherheitslichtstrahl (7) integriert ist.

3. Vorrichtung nach Anspruch 1, dadurch gekennzeichnet, daß die Steueranordnung für die Geschwindigkeit des Abkantstempels oberhalb des Sicherheitslichtstrahls (7) angeordnet ist.

4. Vorrichtung nach einem der Ansprüche 2 oder 3, dadurch gekennzeichnet, daß sie einen Lasersender (8) aufweist, der auf einer Seite der Presse angeordnet ist und einen Laserstrahl (7) aussendet und einen Empfänger (9) aufweist, der auf der anderen Seite der Presse angeordnet ist und zwei lichtempfindliche Bauteile (13, 13') aufweist, die im Abstand senkrecht übereinander und zwar innerhalb des vom Laserstrahl überdeckten Bereichs angeordnet sind.

5. Vorrichtung nach Anspruch 4, dadurch gekennzeichnet, daß der Lasersender einen Strahl aussendet, der von einem ersten Quarz gesteuert wird, wobei ein zweiter Quarz derart ausgestaltet ist, daß die beiden Quarze sich derart gegenseitig überwachen, daß die Meßgenauigkeit gewährleistet ist und jede Frequenzabweichung verhindert ist.

6. Vorrichtung nach einem der Ansprüche 4 oder 5, dadurch gekennzeichnet, daß die beiden lichtempfindlichen Bauteile (13, 13') im selben Gehäuse (10) derart angeordnet sind, daß ein unveränderlicher Abstand (14) zwischen diesen beiden lichtempfindlichen Bauteilen gewährleistet ist.

7. Vorrichtung nach einem der Ansprüche 4 bis 6, dadurch gekennzeichnet, daß die zwei Zähler aufweist, die derart ausgestaltet sind, daß sie während einer Unterbrechung des ersten lichtempfindlichen Bauteils (13) eingeschaltet werden und während eines Unterbrechens des zweiten lichtempfindlichen Bauteils (13') abgeschaltet werden, so daß die Bewegung des Stempels unterbrochen wird, wenn die Anzahl der gemessenen Impulse durch wenigstens einen der Zähler kleiner als eine vorgegebene Anzahl ist.

8. Vorrichtung nach einem der vorhergehenden Ansprüche, dadurch gekennzeichnet, daß der Abstand (d) zwischen dem Lichtstrahl (7) und der Oberfläche (4) des zu verformenden Werkstücks zwischen 3 und 8 mm liegt.

Fig. 1

Fig. 2

Fig. 3